# FASCICULE DE BREVET EUROPEEN

(11) **EP 2 299 515 B1**
(45) Date de publication et mention de la délivrance du brevet: **03.04.2013**
(21) Numéro de dépôt: 10173431.7
(22) Date de dépôt: 19.08.2010
(51) Int. Cl.: H01M 2/10, H01M 6/40, H01M 10/04, H01M 10/0525, H01M 10/0585

(54) **Procédé d'encapsulation d'une batterie de type lithium-ion en couches minces directement sur le substrat**
Verfahren zum Einkapseln einer Batterie vom Typ Lithium-Ionen-Batterie mit Dünnschichten direkt auf dem Substrat
Method for encapsulating a lithium-ion battery in thin layers directly on the substrate

(30) Priorité: 28.08.2009 FR 0955868
(43) Date de publication de la demande: 23.03.2011
(73) Titulaire: STMicroelectronics (Tours) SAS, 37100 Tours (FR)
(72) Inventeur: Bouillon, Pierre, 37230, LUYNES (FR); Hauttecoeur, Patrick, 37380, Monnaie (FR); Riou, Benoît, 37100, TOURS (FR); Barreau, Laurent, 37130, CINQ MARS LA PILE (FR)
(74) Mandataire: de Beaumont, Michel

(56) Documents cités:
- WO-A1-2008/011061
- FR-A1- 2 862 437
- FR-A1- 2 874 128

## Description

### Domaine de l'invention

La présente invention concerne un procédé d'encapsulation d'une batterie de type lithium-ion en couches minces et, plus particulièrement, un procédé d'encapsulation d'une telle batterie directement sur le substrat sur lequel elle s'étend.

### Exposé de l'art antérieur

Les batteries de type lithium-ion ont l'avantage de comporter un électrolyte solide non-inflammable qui présente, de plus, une conductivité ionique bonne sur une grande gamme de températures. De telles batteries pourraient avantageusement être utilisées dans des dispositifs électroniques mobiles tels que les téléphones ou ordinateurs portables.

Pour réaliser des batteries lithium-ion en couches minces, typiquement des batteries ayant des dimensions inférieures à 2,5 x 2,5 cm², il est connu d'utiliser des techniques de pulvérisation au travers d'un pochoir ("shadow mask" en anglais). Ces techniques consistent à placer un pochoir ou masque au-dessus d'un support ou substrat et à pulvériser, au travers de ce masque, les différentes couches constitutives de la batterie (couches actives).

Généralement, de nombreuses batteries en couches minces sont formées simultanément sur un même substrat. Ensuite, on découpe le substrat pour obtenir des batteries individuelles ou élémentaires qui sont placées dans des boîtiers ou encapsulées. Ces boîtiers assurent la connexion entre les diverses couches actives des batteries élémentaires et des plots de connexion formés en périphérie de ces boîtiers.

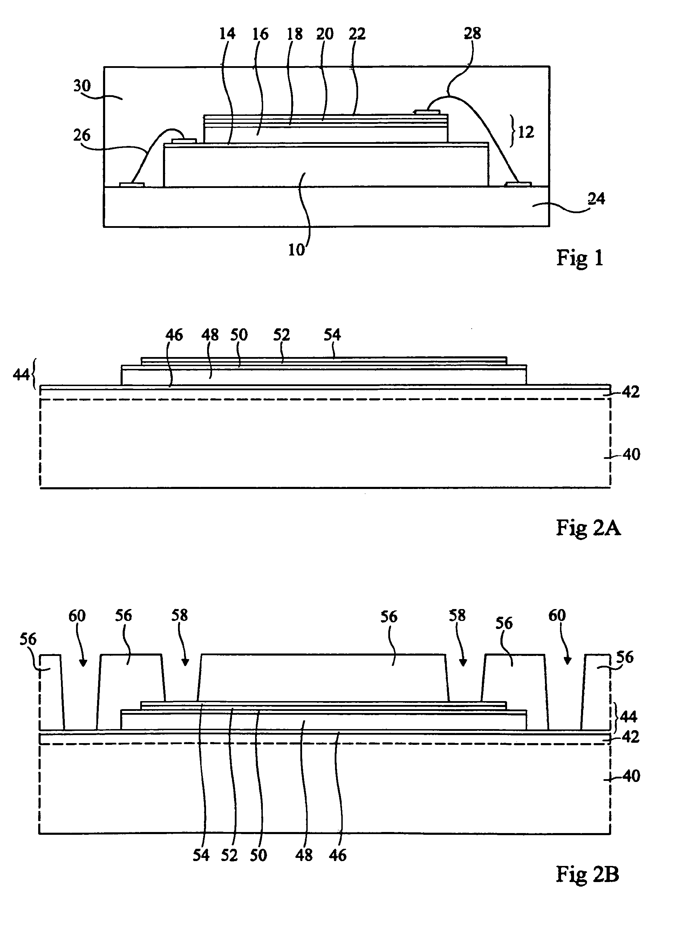

La figure 1 illustre, de façon très simplifiée, une batterie de type lithium-ion élémentaire mise en boîtier ou encapsulée. Sur une portion d'un substrat 10 est formé un empilement 12 des différentes couches actives et de contact d'une batterie de type lithium-ion. L'empilement 12 peut être formé par exemple par une succession de pulvérisations en phase vapeur (PVD).

L'empilement 12 comprend une première couche 14 de collecteur de cathode, une deuxième couche 16 de cathode, une troisième couche 18 formant l'électrolyte de la batterie, une quatrième couche 20 formant l'anode de la batterie et une cinquième couche 22 de collecteur d'anode. Dans l'exemple représenté, la couche de collecteur de cathode 14 s'étend sur toute la surface du substrat 10 tandis que les autres couches de l'empilement 12 s'étendent sur une surface moins étendue. Ceci permet de prendre contact sur la couche de collecteur de cathode 14.

L'ensemble du substrat 10 et de l'empilement 12 est fixé en surface d'une plaque 24 formant la portion inférieure du boîtier. Dans l'exemple représenté, des fils de connexion 26 et 28 sont fixés à une de leurs extrémités, respectivement, sur la couche de collecteur de cathode 14 et sur la couche de collecteur d'anode 22 et, à l'autre de leurs extrémités, sur la plaque 24. Des connexions métalliques (non représentées) sont prévues, de façon classique, sur et/ou à travers la plaque 24 pour reporter les contacts 26 et 28 vers l'extérieur du boîtier. Un matériau isolant de passivation et d'encapsulation 30 est formé en surface et sur les côtés de l'ensemble du substrat 10 et de l'empilement 12 pour compléter la structure.

On notera que le boîtier présenté en relation avec la figure 1 n'est qu'un exemple des nombreux boîtiers disponibles pour encapsuler des batteries de type lithium-ion. Notamment, la connexion par des fils 26/28 entre les couches actives de la batterie et le support 24 pourra être assurée par des billes de soudure. De plus, le matériau isolant 30 pourra être constitué d'un empilement de plusieurs couches isolantes de passivation (par exemple des résines) et d'encapsulation (par exemple des céramiques).

Dans des boîtiers classiques de batteries tels que celui de la figure 1, la surface occupée par le substrat 10 représente entre la moitié et les trois quarts de la surface totale de la batterie encapsulée. Par exemple, dans un boîtier formé par la technologie LGA (Land Grid Array) de 3 x 3 mm², un substrat portant une batterie occupe environ 66 % de la surface du boîtier et, dans un boîtier formé par la technologie QFN (Quad Flat No leads) de 5 x 5 mm², le substrat occupe environ 46 % de la surface du boîtier.

De plus, la partie active d'une batterie de type lithium-ion occupe en général environ les trois quarts de la surface du substrat sur lequel elle est formée. Ainsi, la partie active d'une batterie élémentaire occupe une surface inférieure au quart de la surface du boîtier final. Si on diminue la taille de la batterie élémentaire, le rapport entre la surface active de la batterie et la surface du boîtier diminue encore, ce qui annule l'intérêt de la réduction de taille des batteries élémentaires puisque la taille des batteries encapsulées diminue peu. Ainsi, actuellement, une batterie de type lithium-ion formée dans un boîtier de 3 x 3 mm² ne peut stocker une capacité supérieure à un microampère-heure.

Avant la mise en boîtier, des problèmes apparaissent lors de la découpe du substrat pour former des batteries individuelles. En effet, la découpe du substrat est généralement suivie de une ou de plusieurs étapes de nettoyage à l'aide de composés aqueux. Lors de ce ou ces nettoyages, le matériau isolant de passivation et/ou d'encapsulation déposé sur les couches actives de la batterie a tendance à se disloquer ou à se décoller de ces couches actives qui se retrouvent alors en contact avec les agents de nettoyage. Une partie des couches actives d'une batterie de type lithium-ion étant formée de dérivés de lithium très réactifs, on évite au maximum de mettre en contact ces couches avec des composés aqueux.

Ainsi, il existe un besoin d'un procédé d'encapsulation d'une batterie de type lithium-ion augmentant le rapport entre la surface active des batteries élémentaires et la surface totale de la batterie en boîtier et évitant les problèmes de décollement susmentionnés.

### Résumé

Un objet d'un mode de réalisation de la présente invention est de prévoir un procédé d'encapsulation d'une batterie de type lithium-ion directement au niveau du substrat.

Un autre objet d'un mode de réalisation de la présente invention est de prévoir un procédé de formation d'une batterie de type lithium-ion en couches minces sur un substrat que l'on peut découper sans altérer les couches actives de la batterie.

Ainsi, un mode de réalisation de la présente invention prévoit un procédé d'encapsulation d'une batterie de type lithium-ion en couches minces, comprenant les étapes suivantes :
(a) former, sur un substrat, un empilement actif dont la couche inférieure est une couche de collecteur de cathode s'étendant sur une surface supérieure à la surface des autres couches ;
(b) former, sur la structure, une couche de passivation comprenant des ouvertures traversantes en des emplacements destinés à recevoir des contacts de collecteur d'anode et de collecteur de cathode ; (c) former des premières et secondes portions disjointes d'une métallisation de réception de billes de soudure, les premières portions étant situées sur les parois et le fond des ouvertures, les secondes portions recouvrant la couche de passivation ; et (d) former une couche d'encapsulation sur l'ensemble de la structure.

Selon un mode de réalisation de la présente invention, l'étape (b) est précédée des étapes suivantes : former une couche isolante conforme sur la structure ; définir des ouvertures traversantes dans la couche isolante pour dégager au moins une portion de la couche de collecteur de cathode et au moins une portion d'une couche de collecteur d'anode ; former des portions conductrices dans lesdites ouvertures, au moins certaines portions s'étendant sur la couche isolante pour former des contacts déportés.

Selon un mode de réalisation de la présente invention, l'étape (d) est précédée d'une étape de formation de billes de soudure sur les premières portions de la métallisation de réception de billes de soudure, la couche d'encapsulation laissant apparaître la surface desdites billes de soudure.

Selon un mode de réalisation de la présente invention, l'étape (d) comprend en outre la formation d'une couche d'encapsulation arrière sur la face du substrat opposée à la face portant l'empilement actif.

Selon un mode de réalisation de la présente invention, le procédé comprend en outre une étape initiale de formation d'une couche isolante en surface du substrat.

Selon un mode de réalisation de la présente invention, les couches de passivation et d'encapsulation sont en une résine époxy.

Selon un mode de réalisation de la présente invention, les premières et secondes portions de la métallisation de réception de billes de soudure sont constituées d'un empilement d'une première couche permettant d'assurer l'adhérence sur la couche inférieure, d'une deuxième couche formant barrière à la diffusion entre la couche inférieure et une troisième couche, la troisième couche assurant l'adhérence de la brasure.

Selon un mode de réalisation de la présente invention, l'empilement actif comprend en outre, sur la couche de collecteur de cathode, une couche de cathode, une couche d'électrolyte, une couche d'anode et une couche de collecteur d'anode, les couches d'anode et de contact d'anode s'étendant sur une surface inférieure à la surface des couches de cathode et d'électrolyte.

Un mode de réalisation de la présente invention prévoit en outre une batterie de type lithium-ion encapsulée, comprenant : sur un substrat, un empilement actif dont la couche inférieure est une couche de collecteur de cathode s'étendant sur une surface supérieure à la surface des autres couches ; une couche de passivation s'étendant sur l'empilement actif et comprenant des ouvertures de contact traversantes ; des premières et secondes portions disjointes d'une métallisation de réception de billes de soudure, les premières portions s'étendant sur les parois et le fond des ouvertures de contact, les secondes portions recouvrant le dessus de la couche de passivation ; et une couche d'encapsulation s'étendant sur la couche de passivation et traversée par des billes de soudure s'étendant dans les ouvertures de contact.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, illustre, de façon simplifiée, une batterie de type lithium-ion classique mise en boîtier ;
les figures 2A à 2E illustrent des résultats d'étapes d'un procédé selon un mode de réalisation de la présente invention ; et
les figures 3B à 3D illustrent des résultats d'étapes d'une variante d'un procédé selon un mode de réalisation de la présente invention.

Par souci de clarté, de mêmes éléments ont été désignés par de mêmes références dans les diverses figures et, de plus, comme cela est habituel dans la représentation de composants de petites dimensions en couches minces, les diverses figures ne sont pas tracées à l'échelle.

### Description détaillée

Pour résoudre les problèmes susmentionnés, les inventeurs prévoient de réaliser l'encapsulation des batteries élémentaires directement sur le substrat sur lequel elles sont formées, et ce avant découpe (technique connue sous l'acronyme anglais WMP, Wafer Molded Package). Ils prévoient en outre une encapsulation particulière des batteries élémentaires évitant les décollements lors de la découpe et la pénétration de composés aqueux vers la zone active de la batterie pendant son utilisation.

Les figures 2A à 2E illustrent des résultats d'étapes d'un procédé selon un mode de réalisation de la présente invention.

A l'étape illustrée en figure 2A, on part d'une structure comprenant un substrat 40, par exemple un substrat semiconducteur tel qu'un substrat de silicium. Une couche d'isolement 42, par exemple en oxyde de silicium, peut être formée sur le substrat 40 si nécessaire. A titre d'exemple, le substrat 40 peut avoir une épaisseur comprise entre 500 et 800 µm.

On notera que, dans les figures, une seule batterie de type lithium-ion élémentaire est représentée. On comprendra que de nombreuses batteries sont généralement formées les unes à côté des autres sur le même substrat.

Sur le substrat 40 (ou sur la couche isolante 42, si elle est prévue) est formé un empilement 44 des différentes couches constitutives d'une batterie de type lithium-ion. L'empilement 44 peut être formé par une succession de pulvérisations en phase vapeur (PVD).

L'empilement 44 comprend les éléments suivants.
- Une première couche 46 formant un collecteur de cathode. Cette couche peut être, à titre d'exemple, en titane, en tungstène, en molybdène, en tantale ou en un alliage ou un empilement de ces matériaux et avoir une épaisseur comprise entre 100 et 500 nm.
- Une deuxième couche 48 formant la cathode de la batterie, constituée d'un matériau tel que du LiTiOS (oxysulfure de titane et de lithium) ou du LiCoO₂ (oxyde de cobalt et de lithium), ayant une épaisseur comprise entre 1 et 10 µm.
- Une troisième couche 50 formant l'électrolyte de la batterie, constituée par exemple de LiPON (oxynitrure phosphoré de lithium) ou de tout autre matériau propre à former un électrolyte d'une pile lithium-ion. La troisième couche 22 a une épaisseur comprise entre 1 et 3 µm.
- Une quatrième couche 52 formant l'anode de la batterie, par exemple en silicium, en germanium, en carbone ou en un empilement ou un alliage de ces matériaux. La quatrième couche a une épaisseur comprise entre 10 et 800 nm.
- Une cinquième couche 54 formant un collecteur d'anode, formée par exemple par une croissance électrolytique à basse température (pour ne pas provoquer de réaction des couches formées de composés de lithium), par exemple en cuivre. A titre d'exemple, cette couche peut avoir une épaisseur comprise entre 100 et 500 nm.

Ainsi, l'empilement 44 des couches 46 à 54 formant la partie active de la batterie de type lithium-ion peut avoir une épaisseur comprise entre 5 et 20 µm. On notera qu'une couche d'accrochage pour le collecteur d'anode ("seed layer" en anglais), par exemple en un alliage de titane et de cuivre, pourra être formée sur la couche 52 avant la formation de la couche 54 par croissance électrolytique. A titre d'exemple, la couche d'accrochage peut avoir une épaisseur comprise entre 100 et 300 nm. On notera que la couche d'accrochage pourra ne pas être prévue si le matériau formant la couche de collecteur d'anode est adapté à être formé directement sur l'anode de la batterie.

Pour permettre la reprise de contact sur les couches de collecteur d'anode et de cathode et pour éviter des courts-circuits entre les différentes couches de l'empilement 44, on prévoit de former ces couches de façon étagée. De préférence, la couche de collecteur de cathode 46 est formée sur toute la surface du substrat 40/42. Les couches 48 et 50 sont formées sur une surface inférieure à celle occupée par la couche 46 et, de préférence, les couches 52 et 54 sont formées sur une surface inférieure à celle occupée par les couches 48 et 50. Ceci permet notamment d'éviter la formation d'un court-circuit entre les couches de cathode 48 et d'anode 52.

A l'étape illustrée en figure 2B, on a déposé, sur la structure de la figure 2A, une couche 56 de passivation dans laquelle des ouvertures traversantes sont formées. A titre d'exemple, la couche 56 peut être en une résine époxy, en oxyde de silicium, en un oxynitrure, en nitrure de silicium, en un polyimide, en BCB (Benzo-Cyclo-Butène)... Une ou plusieurs ouvertures traversantes 58 sont formées dans la couche 56 au-dessus de la couche de collecteur d'anode 54 et une ou plusieurs ouvertures traversantes 60 sont formées dans la couche 56 au-dessus de la couche de collecteur de cathode 46, en des emplacements où celle-ci est apparente. Les ouvertures 58 et 60 peuvent être formées par lithographie au travers d'un masque. On notera que la formation de plusieurs ouvertures traversantes au-dessus de chacune des couches de collecteur d'anode et de cathode permet une meilleure rigidité mécanique du dispositif.

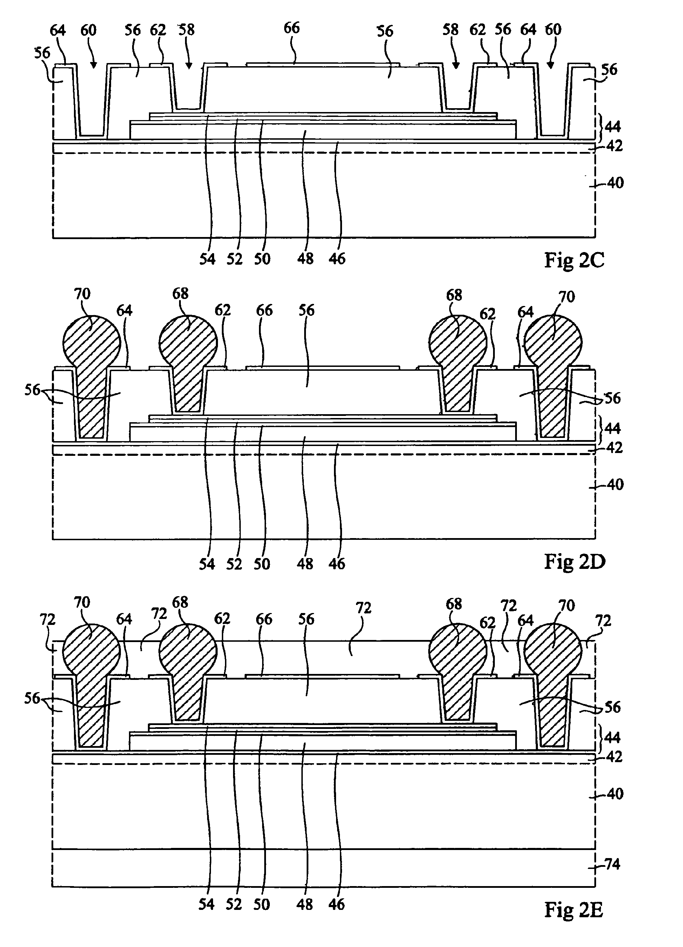

A l'étape illustrée en figure 2C, on a formé, sur la structure de la figure 2B et de façon conforme, des portions disjointes d'une métallisation de réception de billes de soudure connue sous l'acronyme UBM ("Under Bump Metallization"). Des premières portions UBM 62 sont formées sur le fond et les parois des ouvertures 58, et sont ainsi en contact avec la couche de collecteur d'anode 54. Des deuxièmes portions UBM 64 sont formées sur le fond et les parois des ouvertures 60, et sont ainsi en contact avec la couche de collecteur de cathode 46. On notera que les portions 62 et 64 sont prévues pour s'étendre légèrement, de part et d'autre des ouvertures 58 et 60, sur la couche de passivation 56. Une troisième portion UBM 66 est formée, au-dessus de la couche de passivation 56, sur l'ensemble de la surface de cette couche délimitée par les ouvertures 58. Les espaces entre les différentes portions UBM sont prévus suffisamment faibles pour recouvrir la quasi-totalité de la surface de la couche de passivation 56, tout en assurant l'isolement entre les différentes portions UBM.

Pour former les portions 62, 64 et 66, on pourra par exemple former une structure UBM sur l'ensemble du dispositif de la figure 2B, puis graver cette structure de façon adaptée, par exemple par une étape de lithographie au travers d'un masque en résine.

De façon classique, chaque portion 62, 64 et 66 est constituée d'un empilement de trois couches, la première permettant d'assurer l'adhérence sur la couche inférieure, la deuxième formant barrière à la diffusion entre la couche inférieure et la troisième couche, et la troisième assurant l'adhérence de la brasure et améliorant la mouillabilité de celle-ci. Un empilement UBM est généralement formé en des matériaux tels que le titane, le nickel ou l'or.

A l'étape illustrée en figure 2D, on a formé des billes de soudure 68, respectivement 70, au-dessus des portions UBM 62, respectivement 64. Les billes de soudure 68 et 70 peuvent être formées sur la structure de la figure 2C par tout procédé connu et s'étendent dans les ouvertures 58 et 60 de la couche de passivation 56. A titre d'exemple, les billes de soudure 68 et 70 peuvent avoir un diamètre compris entre 100 et 400 µm. On notera que, contrairement à ce qui est représenté dans les figures et de façon classique, les billes de soudure 68 et 70 s'étendent sur l'ensemble de la surface des portions UBM 62 et 64.

A l'étape illustrée en figure 2E, on a formé, sur la structure de la figure 2D, une couche d'encapsulation 72 laissant apparaître la partie supérieure des billes de soudure 68 et 70. Une couche d'encapsulation 74 est également formée sur la face inférieure du substrat 40 pour compléter la mise en boîtier du dispositif. A titre d'exemple, les couches d'encapsulation 72 et 74 peuvent être en tout matériau utilisé classiquement dans les techniques d'encapsulation directement sur le substrat de composants électroniques, par exemple en une résine époxy.

Une fois la structure de la figure 2E obtenue, les batteries individuelles sont découpées pour être utilisées séparément. De préférence, on prévoira un chemin de découpe ayant une longueur comprise entre 90 et 150 µm. Avantageusement, les batteries individuelles découpées sont directement utilisables, les couches d'encapsulation 72 et 74 formant le boîtier de ces batteries. Ainsi, le rapport entre la surface active de la batterie et la surface totale du boîtier est augmenté (de l'ordre de 75 %), l'encapsulation étant réalisée directement sur le substrat. Ainsi, dans un boîtier présentant une surface de 3 x 3 mm², on peut former des batteries présentant une capacité supérieure à 5 µAh.

De plus, la présence de la portion UBM 66 permet d'éviter les phénomènes de décollement de la résine au contact de la batterie lors du découpage des batteries individuelles entre elles. En effet, lors de ce découpage, des composés aqueux utilisés pour le découpage et/ou le nettoyage sont stoppés dans leur pénétration dans le dispositif par la portion UBM 66. La portion UBM 66 forme également une barrière à la pénétration de composés aqueux lors de l'utilisation de la batterie.

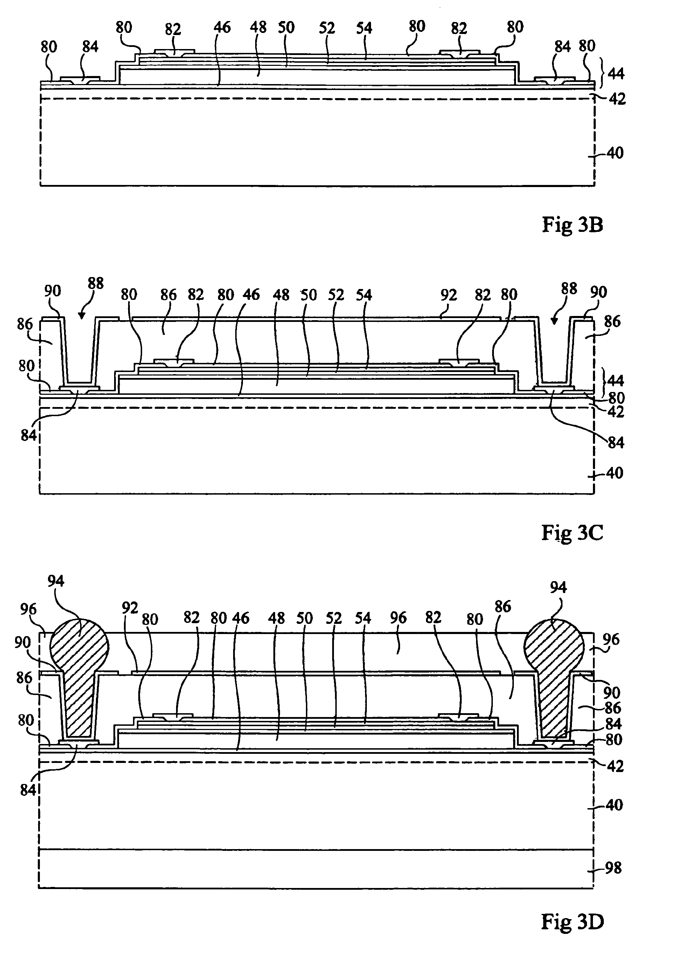

Les figures 3B à 3D illustrent des résultats d'étapes d'une variante du procédé des figures 2B à 2E.

A l'étape illustrée en figure 3B, on a formé, de façon conforme sur la structure de la figure 2A, une couche isolante 80. A titre d'exemple, la couche 80 peut être en un oxyde ou un nitrure formé à basse température (LTO-LTN). Une ou plusieurs ouvertures traversantes sont ensuite formées dans la couche isolante 80 au niveau de points de contacts désirés sur les couches de collecteur de cathode et d'anode. Dans l'exemple représenté, deux ouvertures traversantes sont formées dans la couche de passivation isolante 80 au-dessus de la couche de collecteur de cathode 46 et deux autres ouvertures sont formées au-dessus de la couche de collecteur d'anode 54.

Une fois les ouvertures traversantes formées dans la couche 80, on forme des portions conductrices dans ces ouvertures, ces portions conductrices étant susceptibles de s'étendre sur la couche isolante 80 pour former par la suite des contacts déportés sur la structure.

Des premières portions conductrices 82 permettent de déporter les contacts d'anode en périphérie de l'empilement 44. Les régions conductrices 82 sont en contact avec la couche de collecteur d'anode 54 au niveau des ouvertures dans la couche de passivation 80 et s'étendent sur la structure jusqu'à une portion éloignée de l'empilement 44, par exemple sur une portion de la couche de passivation 80 formée sur la couche de collecteur de cathode 46.

Des secondes portions conductrices 84 sont formées au niveau des ouvertures dans la couche isolante 80 situées au-dessus de la couche de collecteur de cathode 46. Dans l'exemple représenté, les secondes portions conductrices 84 forment en réalité de simples plots en contact avec la couche de collecteur de cathode 46. On notera que ces plots pourront se prolonger sur la couche isolante 80 pour permettre la formation de contacts en des emplacements désirés sur le dispositif.

A titre d'exemple, les portions conductrices 82 et 84 pourront être formés par un dépôt pleine plaque conforme d'une couche d'accrochage (seed layer) puis par une croissance électrolytique, par exemple de cuivre, localisée, par exemple définie à l'aide d'une résine formée par lithographie.

A l'étape illustrée en figure 3C, on a déposé, sur la structure de la figure 3B, une couche 86 de passivation dans laquelle des ouvertures traversantes sont formées. Par exemple, la couche de passivation 86 peut être en une résine époxy, en oxyde de silicium, en un oxynitrure, en nitrure de silicium, en un polyimide, en BCB... Une ou plusieurs ouvertures traversantes 88 sont formées dans la couche 86 au-dessus de la couche de collecteur de cathode 46 et une ou plusieurs ouvertures traversantes (non représentées en figure 3D) sont formées dans la couche 86, au-dessus des extensions des portions conductrices 82.

On a ensuite formé, sur la structure, des portions d'une métallisation de réception de billes de soudure UBM. Des premières portions UBM (non représentées) sont formées sur le fond et les parois des ouvertures de la couche 86 au-dessus des extensions des portions conductrices 82, et sont ainsi en contact avec la couche de collecteur d'anode par l'intermédiaire des portions 82. Des deuxièmes portions UBM 90 sont formées sur le fond et les parois des ouvertures 88, et sont ainsi en contact avec la couche de collecteur de cathode 46. On notera que les portions 90 sont prévues pour s'étendre légèrement, de part et d'autre des ouvertures 88, sur la couche de passivation 86.

Une troisième portion UBM 92 est formée, au-dessus de la couche de passivation 86, sur la surface de cette couche délimitée par les ouvertures 90. Ainsi, la quasi-totalité de la surface de la couche de passivation 86 est recouverte d'un empilement UBM, les espaces entre les différentes portions UBM étant suffisants pour isoler ces différentes portions entre elles.

Pour former les portions UBM 90 et 92, on pourra par exemple former une structure UBM sur l'ensemble du dispositif de la figure 3B puis graver cette structure.

A l'étape illustrée en figure 3D, on a formé des billes de soudure 94 au-dessus des portions UBM 90 et des billes de soudure (non représentées) au-dessus des portions UBM de contact au collecteur d'anode de la batterie. Les billes de soudure 94 peuvent être formées sur la structure par tout procédé connu et avoir, à titre d'exemple, un diamètre compris entre 100 et 400 µm.

Ensuite, la structure est recouverte d'une couche d'encapsulation 96 laissant apparaître la partie supérieure des billes 94. Une couche d'encapsulation 98 est également formée sur la face inférieure du substrat 40, pour compléter la mise en boîtier du dispositif. A titre d'exemple, les couches d'encapsulation 96 et 98 peuvent être en tout matériau utilisé classiquement dans les techniques d'encapsulation directement sur le substrat de composants électroniques, par exemple en une résine époxy.

Une fois la structure de la figure 3D obtenue, les batteries élémentaires sont découpées pour être utilisées individuellement. Comme dans le cas de la structure de la figure 2E, l'encapsulation étant réalisée directement sur le substrat, le rapport entre la surface active de la batterie et la surface totale du boîtier est augmenté. De plus, la présence de la portion UBM 92 permet d'éviter les phénomènes de décollement de la couche de passivation 86 en résine au contact de la batterie lors du découpage des batteries en batteries individuelles et lors de l'utilisation du dispositif.

De plus, le procédé décrit en relation avec les figures 3B à 3D a l'avantage de former une batterie élémentaire encapsulée dans laquelle aucune bille de soudure n'est formée en regard de l'empilement de couches actives de la batterie. Ceci permet d'éviter des tassements de cet empilement et des dégradations de la batterie lors de l'utilisation de la batterie élémentaire encapsulée.

Des modes de réalisation particuliers de la présente invention ont été décrits. Diverses variantes et modifications apparaîtront à l'homme de l'art. En particulier, on notera que les matériaux utilisés pour la formation de l'empilement actif de la batterie pourront être différents de ceux mentionnés ci-dessus, à savoir tout matériau connu permettant la formation des batteries de type lithium-ion en couches minces. Il en est de même pour les matériaux constitutifs des couches de passivation et d'encapsulation.

## Revendications

1. Procédé d'encapsulation d'une batterie de type lithium-ion en couches minces, comprenant les étapes suivantes :
(a) former, sur un substrat (40), un empilement actif (44) dont la couche inférieure est une couche de collecteur de cathode (46) s'étendant sur une surface supérieure à la surface des autres couches (48, 50, 52, 54) ;
(b) former, sur la structure, une couche de passivation (56, 86) comprenant des ouvertures traversantes (58, 60, 88) en des emplacements destinés à recevoir des contacts de collecteur d'anode et de collecteur de cathode ;
(c) former des premières et secondes portions disjointes d'une métallisation de réception de billes de soudure, les premières portions (62, 64, 90) étant situées sur les parois et le fond des ouvertures, les secondes portions (66, 92) recouvrant la couche de passivation ; et
(d) former une couche d'encapsulation (72, 96) sur l'ensemble de la structure.

2. Procédé selon la revendication 1, dans lequel l'étape (b) est précédée des étapes suivantes :
former une couche isolante conforme (80) sur la structure ;
définir des ouvertures traversantes dans la couche isolante (80) pour dégager au moins une portion de la couche de collecteur de cathode (46) et au moins une portion d'une couche de collecteur d'anode (54) ;
former des portions conductrices (84) dans lesdites ouvertures, au moins certaines portions s'étendant sur la couche isolante pour former des contacts déportés.

3. Procédé selon la revendication 1 ou 2, dans lequel l'étape (d) est précédée d'une étape de formation de billes de soudure (68, 70, 94) sur les premières portions (62, 64, 90) de la métallisation de réception de billes de soudure, la couche d'encapsulation (72, 96) laissant apparaître la surface desdites billes de soudure.

4. Procédé selon l'une quelconque des revendications 1 à 3, dans lequel l'étape (d) comprend en outre la formation d'une couche d'encapsulation arrière (74, 98) sur la face du substrat opposée à la face portant l'empilement actif.

5. Procédé selon l'une quelconque des revendications 1 à 4, comprenant en outre une étape initiale de formation d'une couche isolante (42) en surface du substrat (40).

6. Procédé selon l'une quelconque des revendications 1 à 5, dans lequel les couches de passivation (56, 86) et d'encapsulation (72, 96) sont en une résine époxy.

7. Procédé selon l'une quelconque des revendications 1 à 6, dans lequel les premières et secondes portions de la métallisation de réception de billes de soudure (62, 64, 66, 90, 92) sont constituées d'un empilement d'une première couche permettant d'assurer l'adhérence sur la couche inférieure, d'une deuxième couche formant barrière à la diffusion entre la couche inférieure et une troisième couche, la troisième couche assurant l'adhérence de la brasure.

8. Procédé selon l'une quelconque des revendications 1 à 7, dans lequel l'empilement actif (44) comprend en outre, sur la couche de collecteur de cathode (46), une couche de cathode (48), une couche d'électrolyte (50), une couche d'anode (52) et une couche de collecteur d'anode (54), les couches d'anode et de contact d'anode s'étendant sur une surface inférieure à la surface des couches de cathode et d'électrolyte.

9. Batterie de type lithium-ion encapsulée, comprenant :
sur un substrat (40), un empilement actif (44) dont la couche inférieure est une couche de collecteur de cathode (46) s'étendant sur une surface supérieure à la surface des autres couches ;
une couche de passivation (56, 86) s'étendant sur l'empilement actif et comprenant des ouvertures de contact traversantes (58, 60, 88) ;
des premières et secondes portions disjointes d'une métallisation de réception de billes de soudure, les premières portions (62, 64, 90) s'étendant sur les parois et le fond des ouvertures de contact, les secondes portions (66, 92) recouvrant le dessus de la couche de passivation ; et
une couche d'encapsulation (72, 96) s'étendant sur la couche de passivation et traversée par des billes de soudure (68, 70, 94) s'étendant dans les ouvertures de contact.

## Claims

1. A method for encapsulating a thin-film lithium-ion type battery, comprising the steps of:
(a) forming, on a substrate (40), an active stack (44) having as a lower layer a cathode collector layer (46) extending over a surface area larger than the surface area of the other layers (48, 50, 52, 54);
(b) forming, over the structure, a passivation layer (56, 86) comprising through openings (58, 60, 88) at locations intended to receive anode collector and cathode collector contacts;
(c) forming first and second separate portions of an under-bump metallization, the first portions (62, 64, 90) being located on the walls and the bottom of the openings, the second portions (66, 92) covering the passivation layer; and
(d) forming an encapsulation layer (72, 96) over the entire structure.

2. The method of claim 1, wherein step (b) is preceded by the steps of:
forming a conformal insulating layer (80) on the structure;
defining through openings in the insulating layer (80) to expose at least a portion of the cathode collector layer (46) and at least a portion of an anode collector layer (54);
forming conductive portions (84) in said openings, at least some portions extending over the insulating layer to form offset contacts.

3. The method of claim 1 or 2, wherein step (d) is preceded by a step of forming of solder bumps (68, 70, 94) on the first portions (62, 64, 90) of the under-bump metallization, the encapsulation layer (72, 96) leaving the surface of said solder bumps apparent.

4. The method of any of claims 1 to 3, wherein step (d) further comprises the forming of a rear encapsulation layer (74, 98) on the substrate surface opposite to the surface supporting the active stack.

5. The method of any of claims 1 to 4, further comprising an initial step of forming of an insulating layer (42) at the surface of the substrate (40).

6. The method of claim 1, wherein the passivation (56, 86) and encapsulation (72, 96) layers are made of an epoxy resin.

7. The method of any of claims 1 to 6, wherein the first and second portions of the under-bump metallization (62, 64, 66, 90, 92) are formed of a stack of a first layer enabling to ensure the adhesion to the lower layer, of a second layer forming a barrier against the diffusion between the lower layer and a third layer, the third layer ensuring the adhesion of the soldering.

8. The method of any of claims 1 to 7, wherein the active stack (44) further comprises, on the cathode collector layer (46), a cathode layer (48), an electrolyte layer (50), an anode layer (52), and an anode collector layer (54), the anode and anode contact layers extending over a surface area smaller than the surface area of the cathode and electrolyte layers.

9. An encapsulated lithium-ion type battery, comprising:
on a substrate (40), an active stack (44) having as a lower layer a cathode collector layer (46) extending over a surface area greater than the surface area of the other layers;
a passivation layer (56, 86) extending over the active stack and comprising through contact openings (58, 60, 88);
first and second separate portions of a metallization for receiving solder bumps, the first portions (62, 64, 90) extending over the walls and the bottom of the contact openings, the second portions (66, 92) covering the top of the passivation layer; and
an encapsulation layer (72, 96) extending over the passivation layer and crossed by solder bumps (68, 70, 94) extending in the contact openings.

## Patentansprüche

1. Ein Verfahren zum Einkapseln einer Batterie einer Dünnschicht-Lithium-Ionen-Bauart, wobei die folgenden Schritte vorgesehen sind:
(a) Ausbilden auf einem Substrat (40) von einem aktiven Stapel (44), der als eine untere Schicht eine Kathodenkollektorschicht (46) aufweist, die sich über ein Oberflächengebiet größer als das Oberflächengebiet der anderen Schichten (48, 50, 52, 54) erstreckt;
(b) Ausbilden über der Struktur einer Passivierungsschicht (56, 86), die Durchgangsöffnungen (58, 60, 88) aufweist, und zwar an Stellen, die vorgesehen sind zur Aufnahme der Anoden-Kollektor-und Kathoden-Kollektor-Kontakte;
(c) Ausbildung erster und zweiter gesonderter Teile aus einer "under-bump"-Metallisierung (UBM), wobei die ersten Teile (62, 64, 90) auf den Wänden und den Boden der Öffnungen angeordnet sind, während die zweiten Teile (66, 92) die Passivierungsschicht überdecken; und
(d) Formen einer Einkapselungsschicht (72, 96) über der gesamten Struktur.

2. Verfahren nach Anspruch 1, wobei vor dem Schritt (b) die folgenden Schritte ausgeführt werden:
Ausbilden einer konformen Isolierschicht (80) auf der Struktur;
Definieren von Durchgangsöffnungen in der Isolierschicht (80) um mindestens einen Teil der Kathoden-Kollektor-Schicht (46) und mindestens ein Teil einer Anoden-Kollektor-Schicht (54) freizulegen;
Ausbildung leitender Teile (84) in den erwähnten Öffnungen, wobei sich mindestens einige Teile über die Isolierschicht zur Bildung von versetzten Kontakten erstrecken.

3. Verfahren nach Anspruch 1 oder 2, wobei vor dem Schritt (d) ein Schritt des Formens von Löthöckern (Löt-Bumps) (68, 70, 94) auf den ersten Teilen (62, 64, 90) der "under-bump"-Metallisierung (UBM) vorgesehen ist, wobei die Einkapselungsschicht (72, 96) die Oberfläche der erwähnten Löthöcker bzw. -Bumps sichtbar lässt.

4. Verfahren nach einem der Ansprüche 1 bis 3, wobei der Schritt (d) ferner folgendes umfasst: Formen einer hinteren Einkapselungsschicht (74, 98), auf der Substratoberfläche entgegengesetzt zu der den aktiven Stapel tragenden Oberfläche.

5. Verfahren nach einem der Ansprüche 1 bis 4, wobei ferner ein Anfangsschritt vorgesehen ist zum Formen oder Bilden einer Isolierschicht (42) an der Oberfläche des Substrats (40).

6. Verfahren nach Anspruch 1, wobei die Passivierungs-(56, 86)- und die Einkapselungs-(72, 96)-Schichten aus einem Epoxy-Harz hergestellt sind.

7. Verfahren nach einem der Ansprüche 1 bis 6, wobei die ersten und zweiten Teile der "under-bump"-Metallisierung (UBM) (62, 64, 66, 90, 92) ausgebildet sind aus einem Stapel einer ersten Schicht, einer zweiten Schicht und einer dritten Schicht, wobei die erste Schicht die Sicherstellung der Adhäsion an der unteren Schicht ermöglicht, wobei die zweite Schicht eine Barriere gegenüber der Diffusion zwischen der unteren Schicht und einer dritten Schicht bildet und wobei die dritte Schicht die Adhäsion der Lötung sicherstellt.

8. Verfahren nach einem der Ansprüche 1 bis 7, wobei der aktive Stapel (44) ferner folgendes aufweist: auf der Kathoden-Kollektorschicht (46) eine Kathodenschicht (48), eine Elektrolytschicht (50), eine Anodenschicht (52) und eine Anodenkollektorschicht (54), wobei sich die Anoden- und Anodenkontaktschichten über ein Oberflächengebiet erstrecken, das kleiner ist als das Oberflächengebiet der Kathoden- und Elektrolytschichten.

9. Eine eingekapselten Batterie der Lithium-lonen-Bauart, wobei folgendes vorgesehen ist:
auf einem Substrat (40) ein aktiver Stapel (44), der als eine untere Schicht eine Kathoden-Kollektorschicht (46) aufweist, die sich über ein Oberflächengebiet erstreckt, das größer ist als das Oberflächengebiet der anderen Schichten;
eine Passivierungsschicht (56, 86), die sich über den aktiven Stapel erstreckt und Kontaktdurchgangsöffnungen (58, 60, 88) aufweist;
erste und zweite gesonderte Teile einer Metallisierung zur Aufnahme von Löthöckern bzw. -Bumps, wobei die ersten Teile (62, 64, 90) sich über die Wände und den Boden der Kontaktöffnungen erstrecken, während die zweiten Teile (66, 92) das obere der Passivierungsschicht abdecken; und
eine Einkapselungsschicht (72, 96), die sich über die Passivierungsschicht erstreckt und durch Löthöcker bzw. Bumps (68, 70, 94) gekreuzt wird, die sich in die Kontaktöffnungen erstrecken.
